(19) Europäisches Patentamt
European Patent Office
Office européen des brevets

(11) **EP 3 113 379 A1**

(12) **EUROPEAN PATENT APPLICATION**
published in accordance with Art. 153(4) EPC

(43) Date of publication:
04.01.2017 Bulletin 2017/01

(21) Application number: 15755222.5

(22) Date of filing: 27.02.2015

(51) Int Cl.:
*H04B 7/02* (2017.01)

(86) International application number:
PCT/JP2015/055906

(87) International publication number:
WO 2015/129874 (03.09.2015 Gazette 2015/35)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 28.02.2014 JP 2014039578

(71) Applicant: NTT DOCOMO, INC.
Tokyo 100-6150 (JP)

(72) Inventors:
• SAWAHASHI, Mamoru
Tokyo 158-8557 (JP)
• KAWAMURA, Teruo
Tokyo 100-6150 (JP)
• KISHIYAMA, Yoshihisa
Tokyo 100-6150 (JP)

(74) Representative: Hoffmann Eitle
Patent- und Rechtsanwälte PartmbB
Arabellastraße 30
81925 München (DE)

(54) **WIRELESS BASE STATION, USER TERMINAL, WIRELESS COMMUNICATION METHOD AND WIRELESS COMMUNICATION SYSTEM**

(57) To improve throughput in a radio communication system using transmit diversity, a radio base station (10) according to one Aspect of the present invention has a transmission processing section (503) that converts a symbol allocated at a higher symbol rate than a Nyquist rate in a given time domain and/or frequency domain into a symbol allocated at a symbol rate of the Nyquist rate or less in the given time domain and/or frequency domain to generate an OFDMA (Orthogonal Frequency Division Multiple Access) signal for each of a plurality of antennas (101), and a transmission section (103) that transmits the OFDMA signal of each of the plurality of antennas to a user terminal, where the transmission processing section applies transmit diversity with the plurality of antennas to the symbol allocated at the higher symbol rate.

300

FIG.8

EP 3 113 379 A1

**Description**

Technical Field

The present invention relates to a radio base station, user terminal, radio communication method and radio communication system applicable to the next-generation communication system.

Background Art

In UMTS (Universal Mobile Telecommunications System) networks, for the purpose of higher data rates, low delay and the like, Long Term Evolution (LTE) has been specified (Non-patent Document 1). In LTE, as multiple access schemes, a scheme based on OFDMA (Orthogonal Frequency Division Multiple Access) is used on downlink, and a scheme based on SC-FDMA (Single Carrier Frequency Division Multiple Access) is used on uplink.

Citation ListNon-patent Literature

[Non-patent Literature 1] 3GPP TS 36.300 "Evolved Universal Terrestrial Radio Access (E-UTRA) and Evolved Universal Terrestrial Radio Access Network (E-UTRAN); Overall description; Stage 2"

Summary of Invention

Technical Problem

In the LTE system, techniques for improving the transmission quality are studied. For example, as techniques for compensating for fading, there is a diversity technique. The diversity technique is a technique for combining or selecting a plurality of signals with mutually low correlation and thereby improving the communication quality. Herein, transmit diversity refers to diversity achieved by transmitting signals using a plurality of antennas on the transmission side.
However, also in the case of securing the transmission quality by transmit diversity, more improvements are required in throughput.
The present invention was made in view of such a respect, and it is an object of the invention to provide a radio base station, user terminal, radio communication method and radio communication system for enabling throughput to be improved in a radio communication system using transmit diversity.

Solution to Problem

A radio base station according to one Aspect of the present invention is characterized by having a transmission processing section that converts a symbol allocated at a higher symbol rate than a Nyquist rate in a given time domain and/or frequency domain into a symbol allocated at a symbol rate of the Nyquist rate or less in the given time domain and/or frequency domain to generate an OFDMA (Orthogonal Frequency Division Multiple Access) signal for each of a plurality of antennas, and a transmission section that transmits the OFDMA signal of each of the plurality of antennas to a user terminal, where the transmission processing section applies transmit diversity with the plurality of antennas to the symbol allocated at the higher symbol rate.

Advantageous Effects of Invention [0008]

According to the present invention, it is possible to improve throughput in a radio communication system using transmit diversity.

Brief Description of Drawings

FIG. 1 is an explanatory diagram showing one example of Alamouti code;
FIG. 2 is a diagram showing one example of a main function configuration according to OFDMA signal transmission using transmit diversity in a radio base station;
FIG. 3 is a diagram showing one example of a main function configuration according to OFDMA signal reception using transmit diversity in a user terminal;
FIG. 4 contains explanatory diagrams of signal transmission at a Nyquist rate or less and signal transmission of FTN;

FIG. 5 is a conceptual diagram of OFDM symbols and FTN symbols;
FIG. 6 is a diagram to explain features of methods of generating an FTN signal;
FIG. 7 is an explanatory diagram showing one example of signal constellation of OFDM/OQAM;
FIG. 8 is a diagram showing one example of a transmission processing section of a signal obtained by applying FTN to OFDMA using transmit diversity using OFDM/OQAM symbols according to this Embodiment;
FIG. 9 is a conceptual explanatory diagram of mapping processing of FTN symbols to OFDM/OQAM symbols according to this Embodiment;
FIG. 10 is a diagram showing one example of a configuration of FTN mapping in the case where $p=3$ and $q=3$;
FIG. 11 is a diagram showing one example of a time response of IOTA filter;
FIG. 12 is a diagram showing one example of respective frequency responses in the case of using IOTA and rectangular window functions;
FIG. 13 is a diagram showing one example of a reception processing section of a signal obtained by applying FTN to OFDMA using transmit diversity using OFDM/OQAM symbols according to this Embodiment;
FIG. 14 is a schematic diagram showing one example of a radio communication system according to one Embodiment of the present invention;
FIG. 15 is an explanatory diagram of an entire configuration of a radio base station according to one Embodiment of the invention;
FIG. 16 is an explanatory diagram of a function configuration of the radio base station according to one Embodiment of the invention;
FIG. 17 is an explanatory diagram of an entire configuration of a user terminal according to one Embodiment of the invention; and
FIG. 18 is an explanatory diagram of a function configuration of the user terminal according to one Embodiment of the invention.

Description of Embodiments

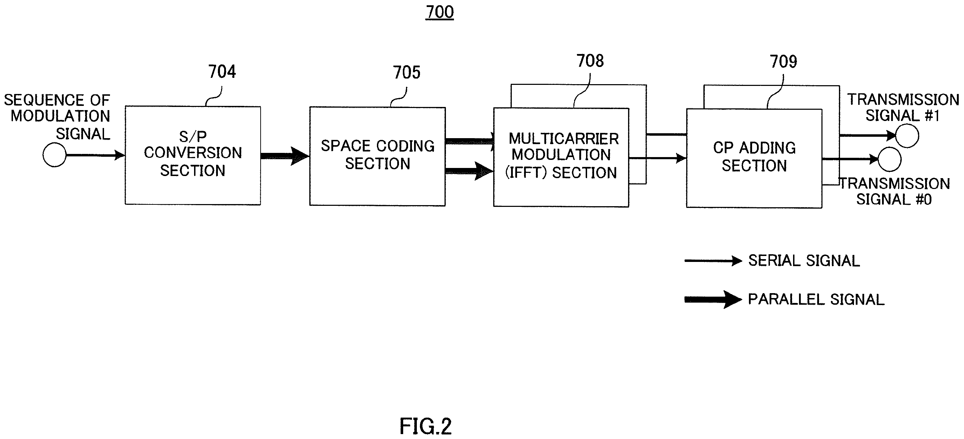

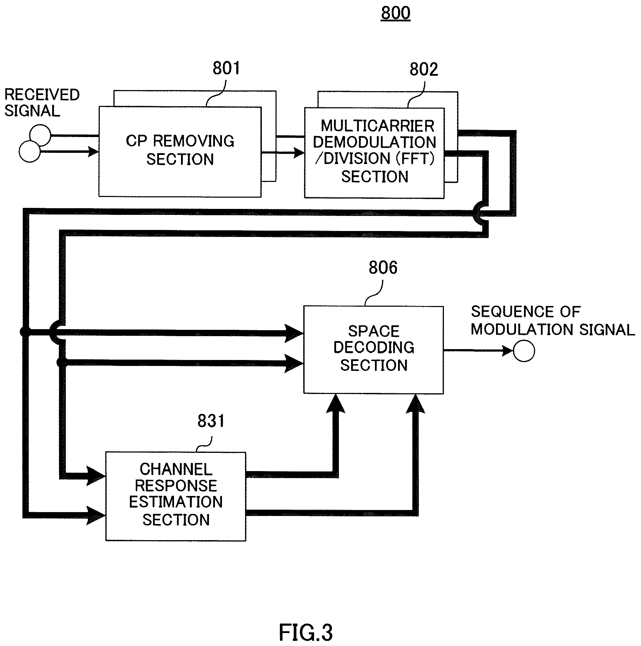

An Embodiment of the present invention will be described below in detail with reference to drawings.
In a radio communication system, the problem is a fading phenomenon that the communication quality varies due to the effect of multipath. As techniques for compensating for fading, there is diversity. Among schemes of diversity, transmit diversity refers to diversity achieved by transmitting signals using a plurality of antennas on the transmission side. In transmit diversity, since there is no need of always increasing the number of reception antennas on the reception side, it is possible to obtain the diversity effect, while suppressing the circuit scale and power consumption on the reception side.
The transmit diversity is broadly divided into open loop type transmit diversity without using feedback information from the reception side, and closed loop type transmit diversity using feedback information from the reception side. For example, in open loop type transmit diversity, the transmission side generates symbols of each antenna so as to configure the same information sequence with symbols of a plurality of antennas. In this case, the reception side receives a signal configured with symbols of a plurality of antennas on the transmission side, and performs decoding processing.
Herein, open loop type transmit diversity may be achieved by using a plurality of symbols in the time domain or may be achieved by using a plurality of symbols in the frequency domain. For example, it is possible to achieve open loop type transmit diversity by coding with Space-Time Code. As Space-Time code that is used widely, there is Alamouti code.
In the Alamouti code, two successive signals ($x_{0,1}$ and $x_{1,1}$) are collectively coded as a single block. In the case of performing Alamouti coding on signals of two successive symbols in the time domain (i.e. the case where 1 indicates the same subcarrier index), the code is referred to as Space-Time Block Code (STBC). Further, in the case of performing Alamouti coding on signals of two successive subcarriers in the frequency domain (i.e. the case where 1 indicates the same symbol index), the code is referred to as Space-Frequency Block Code (SFBC). Coding by STBC is also referred to as time space coding, coding by SFBC is also referred to as frequency space coding, and these schemes are also collectively called space coding.

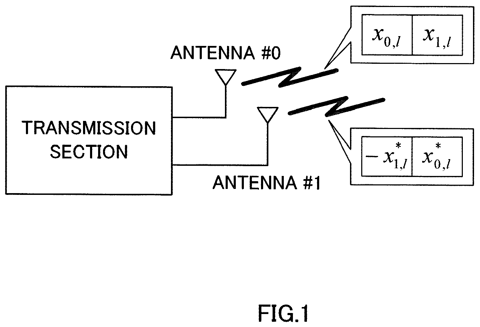

FIG. 1 is an explanatory diagram showing one example of Alamouti code. In FIG. 1, the transmission side (for example, transmission section of a radio base station) performs Alamouti coding on two successive signals ($x_{0,1}$ and $x_{1,1}$), and transmits in the order of $x_{0,1}$ and $x_{1,1}$ from one antenna (antenna #0), while transmitting in the order of $-x_{1,1}^*$ and $x_{0,1}^*$ ("*" represents complex conjugate) from another antenna (antenna #1). The reception side (for example, reception section of a user terminal) performs simple time space decoding processing on a received signal, and is thereby capable of decoding to original $x_{0,1}$ and $x_{1,1}$.
In the case of achieving open loop type transmit diversity on downlink of LTE using OFDMA, for example, configurations of a radio base station and user terminal are as shown in FIGs. 2 and 3.
FIG. 2 shows one example of a main function configuration according to OFDMA signal transmission using transmit diversity in a radio base station. An OFDMA transmission processing section 700 has at least an S/P (serial/parallel) conversion section 704, space coding section 705, multicarrier modulation (IFFT) sections 708 and CP adding sections 709.

The S/P conversion section 704 performs serial/parallel conversion on a plurality of samples of a modulated symbol according to the number of allocated subcarriers of OFDMA, and outputs the resultant to the space coding section 705.

The space coding section 705 performs space coding on the signal output from the S/P conversion section 704 by STBC or SFBC, and outputs a signal corresponding to each antenna to a respective different IFFT section 708.

The IFFT section 708 uses IFFT processing for a sequence output from the space coding section 705 to generate a signal in the time domain, and outputs the signal to the CP adding section 709.

For the signal output from the IFFT section 708, the CP adding section 709 adds a CP to each symbol to output as a transmission signal. In addition, filter processing may be further applied to the transmission signal. The transmission signals (transmission signals #0, #1) output from respective CP adding sections are transmitted to a user terminal from respective different antennas.

FIG. 3 shows one example of a main function configuration according to OFDMA signal reception using transmit diversity in a user terminal. An OFDMA reception processing section 800 has at least CP removing sections 801, multicarrier demodulation/division (FFT) sections 802, space decoding section 806 and channel response estimation section 831. In addition, for each section, a configuration may be made where a plurality of sections is provided to enable parallel processing to be performed. For example, in FIG. 3, the CP removing sections 801, IFFT sections 802 and the like allow parallel processing.

The CP removing section 801 removes a CP in an input received signal to output to the FFT section 802. In addition, inverse filter processing may be applied to the received signal.

The FFT section 802 applies multicarrier demodulation/division by FFT, transforms the signal in the time domain into a signal in the frequency domain, and outputs a symbol in each subcarrier position of OFDMA to the channel response estimation section 831 and space decoding section 806.

The channel response estimation section 831 estimates a channel response using a reference signal included in the signal output from the FFT section 802, and outputs the estimation result to the space decoding section 806.

Using the estimation value of the channel response of each transmission signal, which is subjected to space coding and transmitted, in each reception antenna in receive diversity, the space decoding section 806 performs decoding based on the Alamouti code. During the process of decoding of space coding, a channel variation between each transmission antenna and the reception antenna is corrected, and received signals from two transmission antennas are combined in phase. For example, the space decoding section 806 may perform decoding by STBC, using a channel response (channel state) in a position of each FFT block (OFDM symbol) estimated by the channel response estimation section 831. Further, the space decoding section 806 may perform decoding by SFBC, using a channel response in a position of each subcarrier estimated by the channel response estimation section 831. Further, the space decoding section 806 is capable of performing Maximal Ratio Combining (MRC), by in-phase-combining the signals subsequent to decoding of space coding of each reception antenna described above.

In addition, in a radio communication system, further increase is required in throughput (total throughput of all user terminals inside the cell). Maximum throughput per user terminal is mainly dependent on a method (range) of scheduling to each user terminal by the radio base station. Various techniques for improving throughput have been studied in the LTE system.

There is Spatial Division Multiplexing (SDM) by MIMO (Multiple Input Multiple Output), as one of the most effective techniques for increase in throughput and frequency usage efficiency in the LTE system. MIMO SDM is a scheme for spatially multiplexing signals (streams) to transmit using a plurality of transmission/reception antennas. For example, in LTE (Rel. 8 LTE), it is possible to achieve a peak data rate of 300 Mbps or more by MIMO SDM with a maximum number of 4 antennas. Further, in LTE-A (Rel. 10 LTE), it is possible to achieve a peak data rate of 1 Gbps or more by single-user/multiuser MIMO SDM with a maximum number of 8 antennas.

Further, Coordinated Multi-Point (CoMP) transmission/reception has also been studied in the LTE system. In CoMP transmission/reception, a plurality of transmission/reception points coordinates to perform transmission/reception of signals for a user terminal. In other words, by using radio resources (time, frequency, power resources and the like) of a plurality of nodes (cell sites), particularly, it is possible to increase throughput of a user terminal in the cell edge. In addition, since radio resources of a plurality of cells are used for a single user terminal, a tradeoff should be considered for throughput, and it is important to perform high-speed scheduling between cells.

In order to increase the peak data rate, high-density multiplexing of physical channels is also effective. As a course of action for increasing the density of physical channels, considered are the spatial domain, frequency domain and time domain.

In the case of increasing the density of radio resources in the spatial domain, antenna space or signal space is increased. Increase in antenna space is allowed by increasing the number of antennas for above-mentioned MIMO multiplexing. For example, MIMO SDM with a maximum number of 8 antennas is adopted in LTE-A, and it is considered further increasing the number of antennas (for example, 24 to 36 antennas). Further, it is also considered that a polarized antenna is introduced to the antenna, and that a vertical polarized wave and horizontal polarized wave are applied to a signal to transmit/receive.

On the other hand, increase in signal space is allowed by increasing the M-ary modulation level. For example, LTE-A uses 64QAM at the maximum, and by further increasing the M-ary modulation level (for example, 256QAM, 512QAM), it is possible to increase the signal space.

In the case of increasing the destiny of radio resources in the frequency domain, it is considered using a Non-Orthogonal Multiple Access (NOMA) scheme. In NOMA, for example, by varying transmission power corresponding to channel gain (for example, RSRP (Reference Signal Received Power)), path loss and the like, signals to a plurality of user terminals are non-orthogonally multiplexed into the same radio resource. Therefore, as distinct from an orthogonal multiplexing scheme such as OFDMA, inter-subcarrier interference (also referred to as Inter Carrier Interference (ICI)) may occur.

In addition, for the frequency domain, it is also possible to improving the data rate by increasing radio resources. For example, it is possible to integrate a plurality of frequency bands by Spectrum Aggregation techniques such as Carrier Aggregation and Dual Connectivity.

However, in the radio communication system using transmit diversity, more improvements are required in throughput.

In order to solve the problem, the inventors of the present invention conceived multiplexing a symbol into an OFDMA signal using transmit diversity at a symbol rate higher than a Nyquist rate in a given time domain and/or frequency domain. Specifically, the inventors conceived mapping a symbol allocated at a symbol rate higher than the Nyquist rate into a spatial-coded OFDM symbol allocated at a symbol rate of the Nyquist rate or less to generate an OFDMA signal using transmit diversity.

The Nyquist rate is an upper limit to a symbol rate for enabling a symbol transmitted in a finite band (for example, system band of LTE) to be decoded uniquely. It is referred to as FTN (Faster-Than-Nyquist) multiplexing a symbol at a symbol rate faster than the Nyquist rate. By FTN, it is possible to increase the density of radio resources in the time and/or frequency domain.

In existing mobile communication schemes (Orthogonal Multiple Access), it is configured that information symbols are multiplexed into resources orthogonal in the time and frequency domains at a rate of the Nyquist rate or less so as not to generate inter-information symbol interference (also referred to as Inter Symbol interference (ISI)) and ICI. On the other hand, since a communication scheme with FTN applied thereto is a Non-Orthogonal Multiple Access scheme, as compared with Orthogonal Multiple Access, it is possible to increase the number of information symbols per time, but the communication scheme undergoes effects of ISI (interference in the time domain) and ICI (interference in the frequency domain). In addition, the information symbol is a symbol obtained by modulating a predetermined bit sequence, and includes a data symbol, control information symbol and the like.

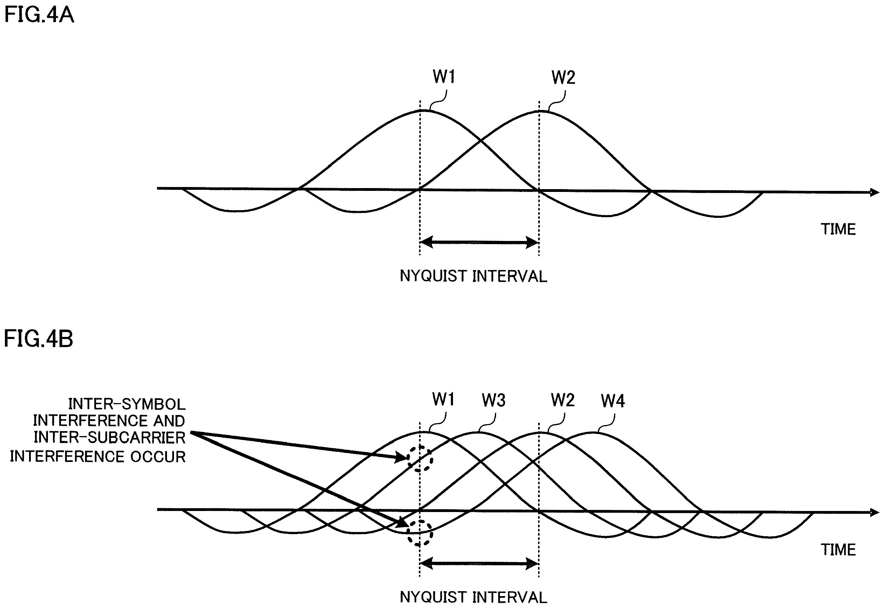

FIG. 4 contains explanatory diagrams of signal transmission at the Nyquist rate or less and signal transmission of FTN. Waveforms W1 and W2 of FIG. 4A represent symbols multiplexed at rates of the Nyquist rate or less (for example, multiplexed at a Nyquist interval). When sampling is performed at the time of maximizing intensity of each waveform, it is almost possible to ignore intensity of the other signal, and therefore, interference does not occur. On the other hand, waveforms W1 to W4 in FIG. 4B represent symbols multiplexed by FTN (for example, multiplexed at intervals half the Nyquist interval). In this case, at sampling time (for example, the time signal intensity is maximum) of W1, ISI and/or ICI occurs by symbols of W3 and W4.

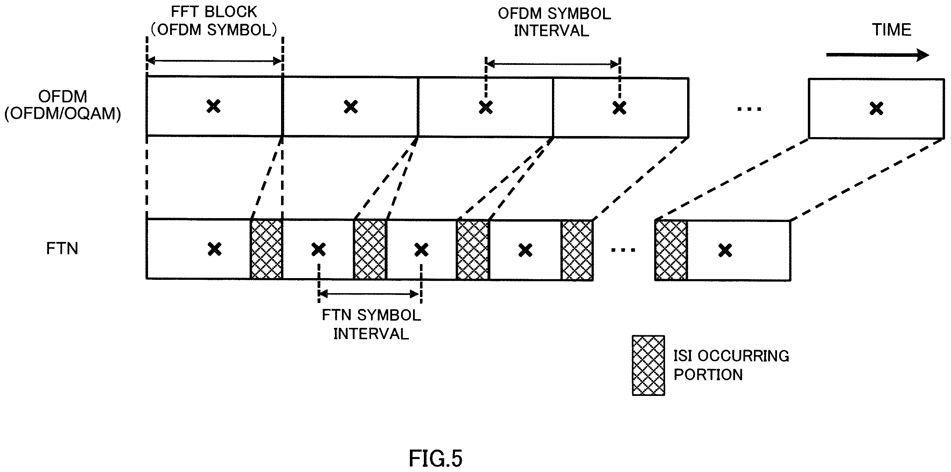

This problem will be explained using a more conceptual example. FIG. 5 is a conceptual diagram of OFDM symbols and FTN symbols. Herein, the FTN symbol is a symbol multiplexed at a symbol rate higher than the Nyquist rate. In addition, FIG. 5 shows the case where a Cyclic Prefix (CP) is not added to each symbol.

In the case of OFDM, an OFDM symbol length is equal to an FFT block length, and is also equal to an OFDM symbol interval. Accordingly, without considering multipath of the transmission path, ISI does not occur. Further, basically, ICI does not occur either.

In the case of FTN, an FTN symbol length is equal to the FFT block length, but an FTN symbol interval is shorter than the OFDM symbol interval. Therefore, ISI occurs. Further, due to the occurrence of ISI before and after, ICI occurs by non-continuity of the carrier frequency during a predetermined symbol interval.

In view of the foregoing, an interference canceller for cancelling ISI and ICI is indispensable in an FTN receiver for performing reception processing on FTN signals. For example, as the interference canceller, a turbo soft inference canceller (SIC: Soft Interference Canceller) is suitable in the respects of performance and computation amount. The turbo soft interference canceller is to perform iteration processing for generating a soft decision estimation value of a symbol providing interference from a Linear Minimum Mean-Square Error (LMMSE) interference suppressing filter and Log-Likelihood Ratio (LLR) of each bit of decoder output to subtract from a received signal.

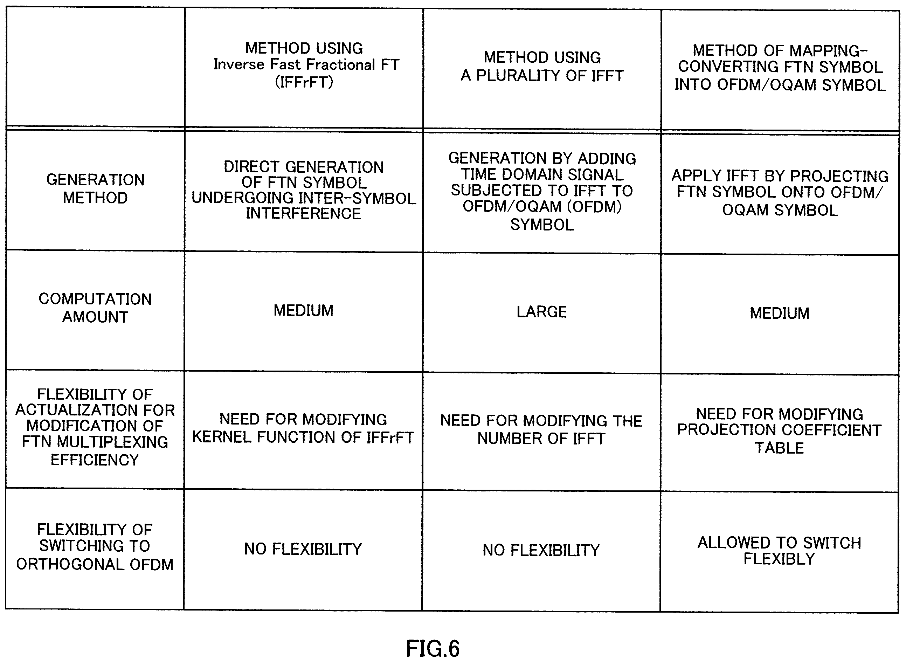

On the other hand, as a method of generating an FTN signal, for example, techniques as shown in FIG. 6 have been studied. FIG. 6 is a diagram to explain features of methods of generating an FTN signal.

The method using Inverse Fast Fractional Fourier Transform (IFFrFT) in FIG. 6 is a method of directly generating an FTN symbol undergoing inter-symbol interference. The generation method is actualized by a single IFFrFT section, but since the Kernel function is used in calculation of IFFrFT, the computation amount is slightly complicated (medium degree). Modification of FTN multiplexing efficiency (the extent to which each FTN symbol is temporally superimposed and multiplexed) requires modification of the Kernel function. Further, instead of Inverse Fast Fourier Transform (IFFT), since IFFrFT is used, it is not possible to switch between a normal OFDM signal and an FTN signal flexibly. In addition, the normal OFDM signal (normal OFDM/OQAM signal) indicates a signal obtained by multiplexing symbols at a symbol rate of the Nyquist rate or less.

The method using a plurality of IFFT in FIG. 6 is a method of adding a time-domain signal subjected to IFFT to an OFDM/OQAM (or OFDM) symbol. In the generation method, the number of IFFT increases as FTN multiplexing efficiency increases, and pre-processing of symbol (subcarrier) shift is required, and therefore, the computation amount is relatively large. Modification of FTN multiplexing efficiency requires modification of the number of IFFT. Further, since a plurality of IFFT is used, it is not possible to switch between a normal OFDM signal and an FTN signal flexibly.

Herein, OFDM/OQAM (Offset Quadrature Amplitude Modulation) is a method of multiplexing (mapping) an In-phase component and Quadrature component of an OFDM symbol with a symbol period (symbol interval) T into only an In-phase component at an interval (=T/2) half the symbol period of OFDM. Therefore, OFDM/OQAM achieves a symbol rate twice that of OFDM, but since information corresponding to one OFDM symbol is transmitted using two OFDM/OQAM symbols, the information bit rate is the same as in OFDM.

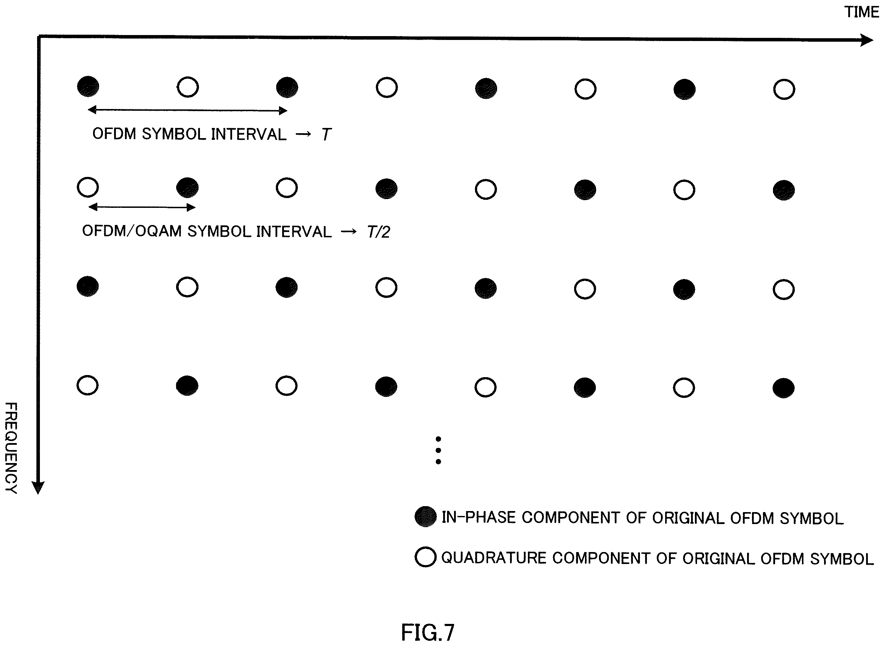

FIG. 7 is an explanatory diagram showing one example of signal constellation of OFDM/OQAM. FIG. 7 illustrates frequency and time resources, and shows In-phase components allocated at intervals (=T/2) half the symbol period T (OFDM symbol interval) of OFDM. FIG. 7 illustrates the method of mapping an In-phase component (black circle)) and Quadrature component (white circle) of an original OFDM symbol alternatively to an In-phase component of an OFDM/OQAM symbol.

Further, the method of mapping-converting an FTN symbol into an OFDM/OQAM symbol in FIG.6 is a method of projecting an FTN symbol onto an OFDM/OQAM symbol to perform IFFT. In the generation method, since FTN mapping/demapping processing increases as FTN multiplexing efficiency increases, the computation amount is slightly complicated (medium degree). Modification of FTN multiplexing efficiency requires modification of a projection coefficient table. On the other hand, it is possible to actualize normal OFDM by not applying FTN mapping, and it is thereby possible to switch between a normal OFDM signal and an FTN signal flexibly.

As an Embodiment of the present invention, transmission/reception processing will be described below in the case of applying FTN to OFDMA using transmit diversity, using OFDM/OQAM symbols. Hereinafter, for convenience in description, the case will be described where the transmission side (FTN transmitter) having an FTN transmission processing section 300 transmits an OFDMA signal with FTN applied thereto to the reception side (FTN receiver) having an FTN reception processing section 400. For example, a configuration may be made where a radio base station is used as the FTN transmitter, and a user terminal is used as the FTN receiver. In addition, the invention is not limited to the above-mentioned configuration, and it is essential only that the radio communication method includes steps of processing implemented by the FTN transmission processing section 300 and FTN reception processing section 400. For example, in the case where a user terminal has a plurality of antennas, and is capable of transmitting an OFDMA signal using transmit diversity, a configuration may be made where the user terminal is provided with the FTN transmission processing section 300, and the radio base station is provided with the FTN reception processing section 400.

(FTN transmission processing section)

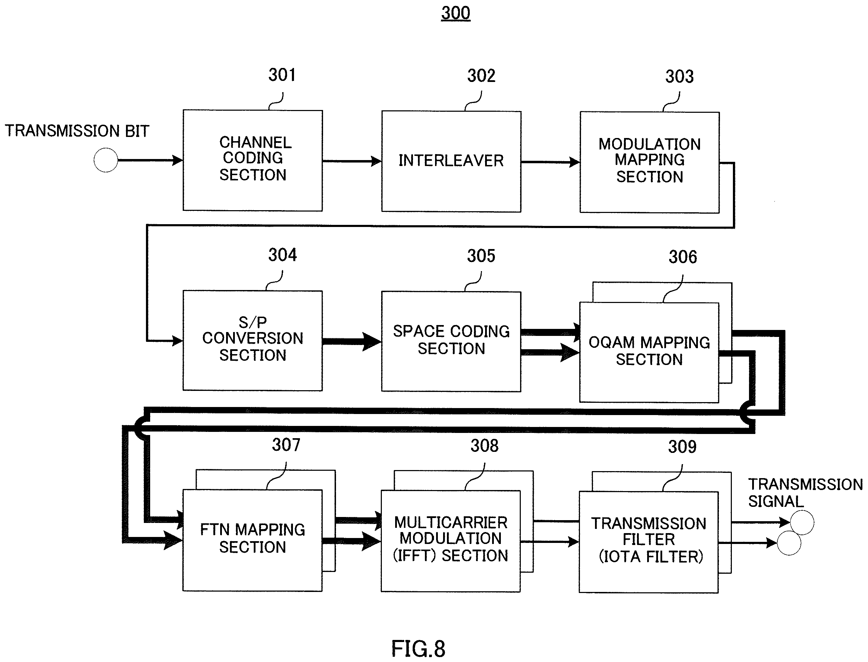

FIG. 8 shows one example of a transmission processing section of a signal obtained by applying FTN to OFDMA using transmit diversity using OFDM/OQAM symbols according to this Embodiment. The FTN transmission processing section 300 has at least a channel coding section 301, interleaver 302, modulation mapping section 303, S/P conversion section 304, space coding section 305, OQAM mapping sections 306, FTN mapping sections 307, multicarrier modulation (IFFT) sections 308, and transmission filters (IOTA filters) 309. In addition, for each section, a configuration may be made where a plurality of sections is provided to enable parallel processing to be performed. Further, in FIG. 8, it is assumed that signals generated by the FTN transmission processing section 300 are transmitted using two antennas, but as long as the number of antennas of the radio base station is two or more, the number of antennas is not limited thereto.

The channel coding section 301 performs error correcting coding (channel coding) on an input transmission bit to output to the interleaver 302. As channel coding, for example, it is possible to use turbo code and RC/QC-LDPC (Rate-Compatible/Quasi-Cyclic-Low Density Parity-Check) code.

The interleaver 302 performs bit-interleaving on bits coded by the channel coding section 301 so as to suppress the occurrence of burst loss, and outputs the resultant to the modulation mapping section 303.

The modulation mapping section 303 performs modulation mapping (data modulation) on bits interleaved by the interleaver 302. As a modulation scheme, for example, it is possible to use digital modulation such as QPSK (Quadrature Phase Shift Keying), 16QAM (Quadrature Amplitude Modulation) and 64QAM. In this Embodiment, it is assumed to use QPSK, but the invention is not limited thereto.

In addition, based on channel state information (CSI) transmitted from the FTN receiver as feedback, the channel coding section 301 and modulation mapping section 303 are capable of determining a channel coding rate and modulation scheme, and performing channel coding processing and modulation processing according to the channel coding rate and modulation scheme, respectively.

Each of the S/P conversion section 304, space coding section 305 and IFFT section 308 is allowed to have the same configuration as that of the S/P conversion section 704, space coding section 705 or IFFT section 708 in FIG. 2 respectively, and therefore, descriptions thereof are omitted.

The OQAM mapping section 306 performs OQAM mapping (OQAM conversion) on input from the space coding section 305 to output to the FTN mapping section 307. In this Embodiment, the OQAM-converted symbol is high-density multiplexed by FTN (allocated at a symbol rate higher than the Nyquist rate), and therefore, is also called an FTN symbol.

The FTN mapping section 307 performs FTN mapping on the FTN symbol input from the OQAM mapping section 306 to output to the IFFT section 308. An OFDM/OQAM symbol to actually transmit is generated By FTN mapping. In other words, a plurality of FTN symbols is superimposed on each OFDM/OQAM symbol. Detailed processing of FTN mapping will be described later.

The transmission filter 309 applies band limitation by a transmission filter to the signal converted in the IFFT section 308 to output as a transmission signal. In this Embodiment, an IOTA (Isotropic Orthogonal Transform Algorithm) filter is used as the transmission filter, but the invention is not limited thereto. Band limitation by the transmission filter will be described later.

(FTN mapping)

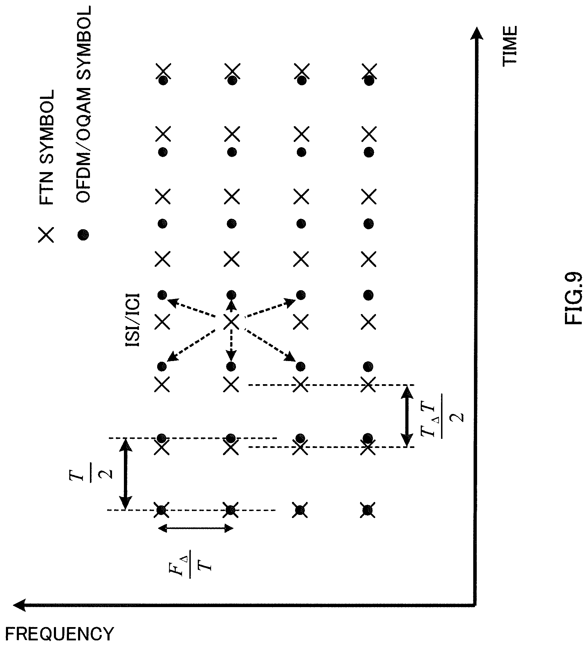

The FTN mapping section 307 in FIG. 8 will be described below in detail with reference to FIG. 9. FIG. 9 is a conceptual explanatory diagram of mapping processing of FTN symbols to OFDM/OQAM symbols according to this Embodiment. In this Embodiment, by representing the FTN symbol by an orthogonal base function of OFDM/OQAM symbol interval, it is made possible to apply conventional IFFT.

As shown in FIG. 9, in OFDM/OQAM, generally, an In-phase component and Quadrature component of OFDM are mapped to only an In-phase component with a period (=T/2) half the symbol period T of OFDM. It is possible to express a transmission signal $s(t)$ by OFDM/OQAM by (Equation 1).

[Mathematics 1]

$$s(t) = \sum_{l=-\infty}^{\infty} \sum_{k=0}^{N-1} j^{k+l} x_{k,l} p\left(t - l\frac{T}{2}\right) e^{j\frac{2\pi kt}{T}} \qquad \text{(Equation 1)}$$

In (Equation 1), $k$ and $l$ respectively represent a subcarrier index and a symbol index. $x_{k,l}$ represents a data symbol of a real number having only the In-phase component phase-offset by $j^{k+l}$. $p(t)$ represents a rectangular wave signal with a period T in the case of an OFDM signal.

On the other hand, in a transmission signal with FTN applied thereto, with respect to the FTN symbol using OFDM/OQAM, the symbol interval is $T_\Delta T/2$, and the subcarrier interval is $F_\Delta/T$. Herein, $T_\Delta$ is a compression factor of a symbol in the time domain of the FTN signal, and $F_\Delta$ is a compression factor of a symbol in the frequency domain of the FTN signal. In addition, the product of the symbol interval and the subcarrier interval of the FTN symbol is $T_\Delta F_\Delta/2$. When it is assumed that T is the Nyquist interval, the case of $T_\Delta F_\Delta=1$ provides a normal OFDM/OQAM signal, and the case of $T_\Delta F_\Delta<1$ provides the FTN signal.

Further, in this Embodiment, in order to enhance locality of time and frequency, waveform shaping (band limitation) is performed by applying a Gaussian filter to the FTN signal.

From the foregoing, it is possible to represent the FTN symbol waveform $g_{k,l}(t)$ subjected to band limitation with the Gaussian filter $g(t)$ by (Equation 2).

[Mathematics 2]

$$g_{k,l}(t) \equiv j^{k+l} g\left(t - lT_\Delta \frac{T}{2}\right) e^{j\frac{2\pi k F_\Delta t}{T}} \qquad \text{(Equation 2)}$$

7

From (Equation 1) and (Equation 2), it is possible to represent the FTN signal subjected to band limitation with the Gaussian filter $g(t)$ by (Equation 3).
[Mathematics 3]

$$s(t) = \sum_{l=-\infty}^{\infty} \sum_{k=0}^{N-1} x_{k,l} g_{k,l}(t) = \sum_{l=-\infty}^{\infty} \sum_{k=0}^{N-1} j^{k+l} x_{k,l} g\left(t - lT_\Delta \frac{T}{2}\right) e^{j\frac{2\pi k F_\Delta t}{T}} \qquad \text{(Equation 3)}$$

In order to enable conventional IFFT to be applied to the FTN signal of (Equation 3), in FTN mapping of Embodiment 1, the FTN symbol waveform $g_{k,l}(t)$ is represented by the orthogonal base function of the OFDM/OQAM symbol interval. Time waveform $\{\Phi_{m,n}(t)\}$ of the orthogonal base function is defined by (Equation 4).
[Mathematics 4]

$$\varphi_{m,n}(t) \equiv j^{m+n} \varphi\left(t - n\frac{T}{2}\right) e^{j\frac{2\pi m t}{T}} \qquad \text{(Equation 4)}$$

In (Equation 4), $m$ and $n$ respectively represent a subcarrier index and symbol index of the orthogonal base function.
It is possible to project the FTN symbol waveform subjected to band limitation with the Gaussian filter of (Equation 2) onto the orthogonal base function of (Equation 4) using a projection coefficient (FTN mapping coefficient) $C_{k,l,m,n}$. As shown in (Equation 5), $C_{k,l,m,n}$ is capable of being calculated from the inner product of $g_{k,l}(t)$ of (Equation 2) and $\Phi_{m,n}(t)$ of (Equation 4), as shown in (Equation 5).
[Mathematics 5]

$$C_{k,l,m,n} \equiv \left\langle g_{k,l}(t), \varphi_{m,n}(t) \right\rangle = \Re\left\{ \int g_{k,l}(t) \varphi_{m,n}^*(t) dt \right\} \qquad \text{(Equation 5)}$$

Herein, $\Re\{z\}$ represents a real part of complex number z, and $\Phi^*_{m,n}$ represents conjugate of $\Phi_{m,n}$.
In other words, the projection coefficient $C_{k,l,m,n,}$ indicates an interference factor given to a subcarrier $m$ and symbol $n$ of the orthogonal base function $\Phi_{m,n}(t)$ from the FTN symbol allocated in a position of a *subcarrier k* and symbol *l*.
Using the projection coefficient $C_{k,l,m,n,}$ it is possible to represent the FTN signal of (Equation 3) by (Equation 6).
[Mathematics 6]

$$s(t) = \sum_{l=-\infty}^{\infty} \sum_{k=0}^{N-1} \sum_{m,n} x_{k,l} C_{k,l,m,n} \varphi_{m,n}(t) \qquad \text{(Equation 6)}$$

From the foregoing, the FTN mapping section 305 applies (Equation 7) to the FTN symbol $x_{k,l}$ with the symbol interval $T_\Delta T/2$ and carrier interval $F_\Delta/T$ to convert into an OFDM/OQAM symbol $x'_{m,n}$ with the symbol interval T/2 and subcarrier interval $F_\Delta/T$. In other words, the section maps the symbol (FTN symbol) such that the product $(T_\Delta F_\Delta/2)$ of the symbol interval and the subcarrier interval is less than 1/2 to the OFDM/OQAM (Orthogonal Frequency Division Multiple Access/Offset Quadrature Amplitude Modulation) symbol such that the product of the symbol interval and the subcarrier interval is 1/2.
[Mathematics 7]

$$x'_{m,n} = x_{k_1,l_1} C_{k_1,l_1,m,n} + x_{k_2,l_2} C_{k_2,l_2,m,n} + x_{k_3,l_3} C_{k_3,l_3,m,n} + \cdots$$

$$= \sum_{p,q} x_{k_p,l_q} C_{k_p,l_q,m,n}$$

(Equation 7)

In (Equation 7), p and q respectively represent the number of symbols in the time domain and frequency domain used in projection.

From (Equation 6) and (Equation 7), it is possible to further represent the FTN signal by (Equation 8).
[Mathematics 8]

$$s(t) = \sum_{n=-\infty}^{\infty} \sum_{m=0}^{N-1} x'_{m,n} \varphi_{m,n}(t)$$

(Equation 8)

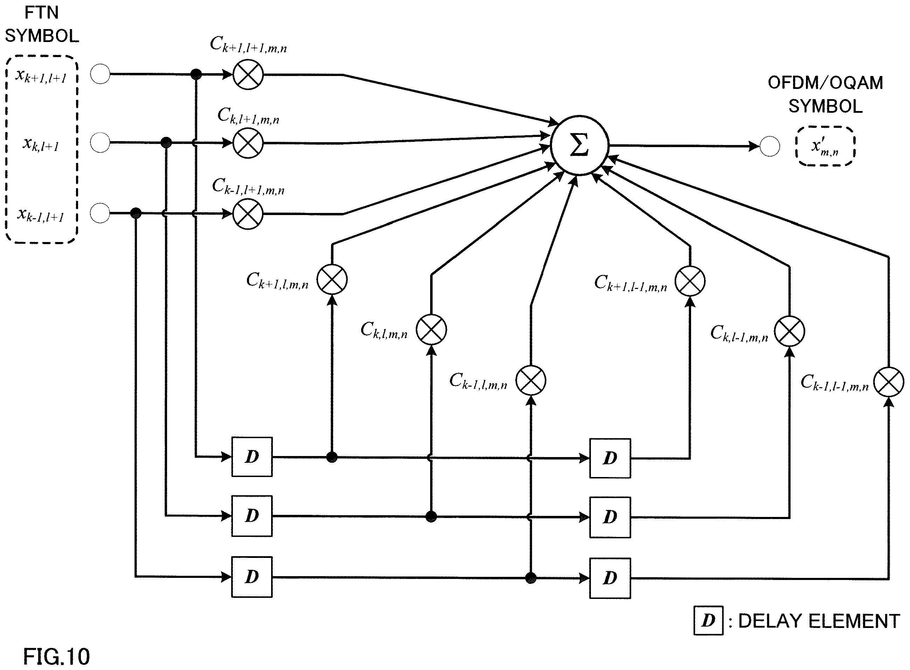

FIG. 10 shows one example of a configuration of FTN mapping in the case where $p$=3 and $q$=3. In this example, a single OFDM/OQAM symbol $x'_{m,n}$ is generated from total 9 FTN symbols, $x_{k+1,l+1}$, $x_{k,l+1}$, $x_{k-1,l+1}$, $x_{k+1,l}$, $x_{k,l}$, $x_{k-1,l}$, $x_{k+1,l-1}$, $x_{k,l-1}$, $x_{k-1,l-1}$. FIG. 10 shows the configuration for performing conversion of (Equation 7) using delay elements, multipliers and adder, but the present invention is not limited to the configuration.

(Band limitation with the transmission filter)

Band limitation with the transmission filter 309 in FIG. 8 will be described below in detail. In this Embodiment, as the above-mentioned orthogonal base function $\varPhi m,n(t),$ instead of a rectangular window used in normal OFDM, in order to localize projection of the FTN symbol onto the base function, an IOTA pulse (IOTA window function) is used. In this case, by applying an IOTA filter to an IFFT waveform, it is possible to actualize.

In the case of using a sine wave of the same rectangular window as in OFDM in the orthogonal base function i.e. in the case of $\varPhi(t)=rect(t)$ (rect(t) is the rectangular function), a transmission signal $s(t)$ is represented by (Equation 9).
[Mathematics 9]

$$s(t) = \sum_{n=-\infty}^{\infty} \sum_{m=0}^{N-1} j^{m+n} x'_{m,n} \cdot rect\left(t - n\frac{T}{2}\right) e^{j\frac{2\pi mt}{T}}$$

(Equation 9)

Since a frequency-domain waveform of the sine wave of the rectangular window is the sine function, subcarrier interference (ICI) is expanded into a wide range in the case of projecting the FTN symbol onto the OFDM/OQAM symbol.

By increasing p and/or q in (Equation 7) to widen the frequency and time domains of FTN mapping, it is possible to reduce ICI, but the computation amount increases. Further, when the frequency and time domains of FTN mapping are widened, power is extremely low in each FTN symbol multiplexed into the OFDM/OQAM symbol position. Therefore, in the case of actually performing channel estimation using the OFDM/OQAM symbol in the FTN receiver, there is the risk that accuracy deteriorates in the soft decision symbol estimation value according to turbo SIC.

On the other hand, a transmission signal $s(t)$ in the case of using the IOTA pulse in the orthogonal base function is represented by (Equation 10).
[Mathematics 10]

$$s(t) = \sum_{n=-\infty}^{\infty} \sum_{m=0}^{N-1} j^{m+n} x'_{m,n} \cdot \Im\left(t - n\frac{T}{2}\right) e^{j\frac{2\pi mt}{T}}$$

(Equation 10)

Herein, $\Im(t)$ represents an IOTA window function i.e. time response (impulse response) of the IOTA filter.

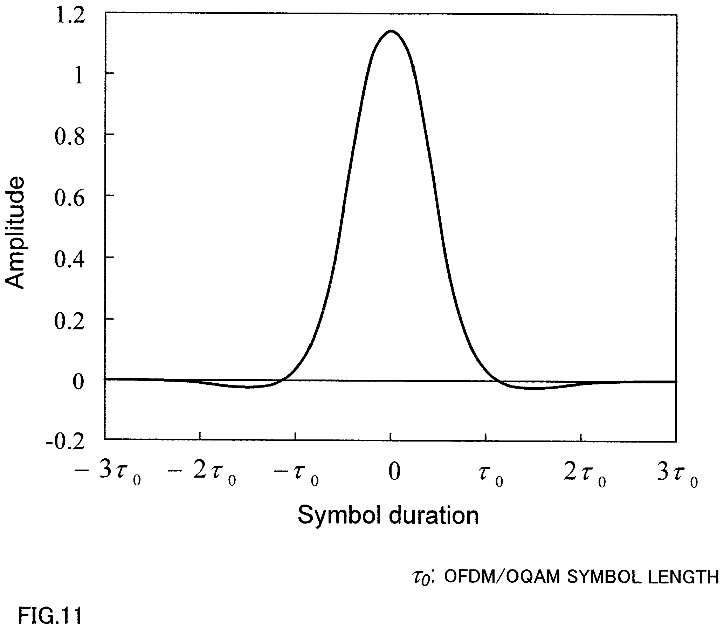

The IOTA filter is basically the Gaussian function, and actualizes the time response and frequency response of the same shape. FIG. 11 is a diagram showing one example of the time response of the IOTA filter. In FIG. 11, $\tau_0$ represents an OFDM/OQAM symbol length. As shown in FIG. 11, the IOTA filter has excellent convergence characteristics in the time domain.

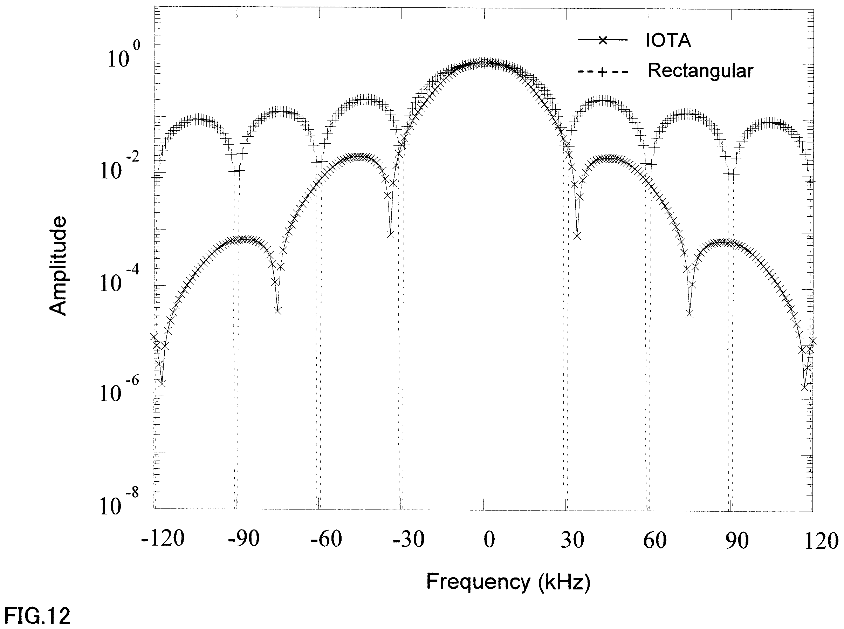

FIG. 12 is a diagram showing one example of respective frequency responses in the case of using IOTA and rectangular window functions. In this Embodiment, radio parameters of LTE are assumed, and the subcarrier interval of OFDM/OQAM is 30 kHz (the subcarrier interval of OFDM as a base is 15 kHz.) As shown in FIG. 12, in the case of applying the IOTA function, as compared with the case of applying the rectangular wave function, it is possible to decrease leak power to adjacent subcarriers.

As described above, by applying the IOTA filter, it is possible to achieve excellent convergence characteristics in the time and frequency domains. Therefore, from the viewpoints of decreasing the computation amount of (Equation 7) in the FTN mapping section and increasing accuracy of the soft decision symbol estimation value of turbo SIC, in this Embodiment, by applying the IOTA filter, dispersion of the FTN symbol for the OFDM/OQAM symbol is narrowed to localize interference power.

When it is assumed that the number of sampling points of IFFT/FFT is N and that the sampling period of IFFT/FFT is $Ts$ ($=T/N$), it is possible to deform (Equation 10) to (Equation 11).

[Mathematics 11]

$$s(pT_s) = \sum_{n=-\infty}^{\infty} \Im\left(pT_s - n\frac{T}{2}\right) \cdot X'_n(pT_s) \qquad \text{(Equation 11)}$$

Herein, $\Re$ holds.

(Equation 11) expresses that the IOTA filter is applied to $X'_n(pT_s)$ indicative of a signal portion subsequent to IFFT.

(FTN reception processing section)

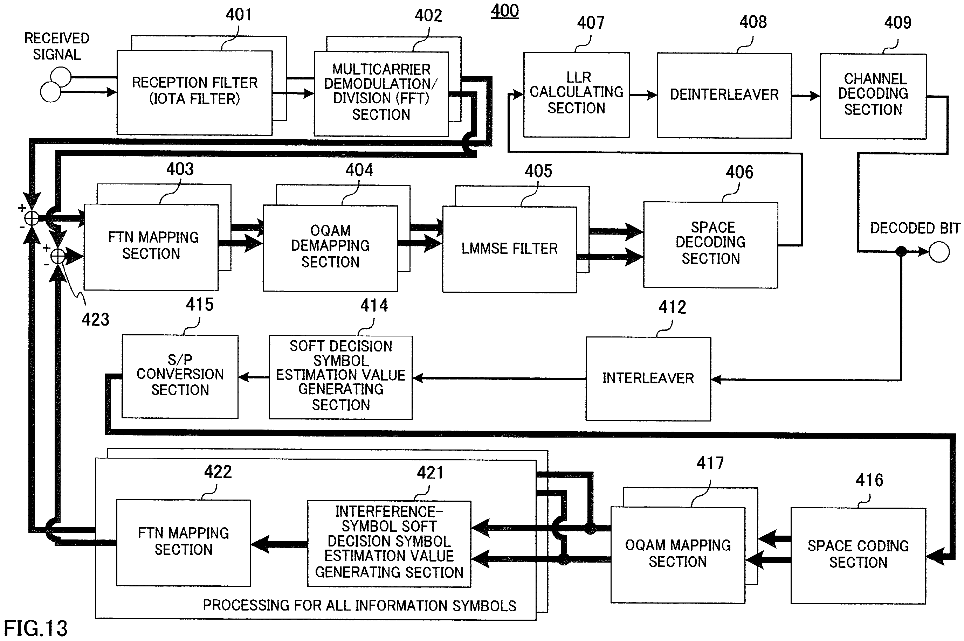

FIG. 13 shows one example of a reception processing section of a signal obtained by applying FTN to OFDMA using transmit diversity using OFDM/OQAM symbols according to this Embodiment. An FTN reception processing section 400 has at least reception filters (IOTA filters) 401, multicarrier demodulation/division (FFT) sections 402, FTN mapping sections 403, OQAM demapping sections 404, LMMSE filters 405, space decoding section 406, LLR calculating section 407, deinterleaver 408, channel decoding section 409, interleaver 412, soft decision symbol estimation value generating section 414, S/P conversion section 415, space coding section 416, OQAM mapping sections 417, interference-symbol soft decision symbol estimation value generating sections 421,FTN mapping sections 422, and combining section 423. In addition, for each section, a configuration may be made where a plurality of sections is provided to enable parallel processing to be performed. For example, in FIG. 13, the FFT sections 402 and the like allow parallel processing. Further, in FIG. 13, it is assumed that the FTN reception processing section 400 uses two antennas to receive signals, but the number of antennas is not limited thereto.

In addition, each of the FFT section 402 and space decoding secti0n 406 is respectively allowed to have the same configuration of the FFT section 802 or space decoding section 806 in FIG. 3, and therefore, descriptions thereof are omitted. Further, the FTN reception processing section 400 may have the function of estimating a channel response as the response estimation section 831 in FIG. 3.

The reception filter 401 performs IOTA filter processing on an input received signal to output to the FFT section 402.

The combining section 423 subtracts a soft decision symbol estimation value of interference symbol described later from a symbol in each subcarrier position of OFDM/OQAM output from the FFT section 402, and outputs the resultant to the FTN demapping section 403. In addition, in the case where the soft decision symbol estimation value of interference symbol is not calculated such as the first-cycle processing of turbo SIC, the combining section 403 may be configured to output a received signal subjected to the FFT processing without modification, by subtracting 0 or not performing any processing.

The FTN demapping section 403 performs demapping processing to reproduce an FTN symbol on the OFDM/OQAM symbol input from the combining section 423, using a Matched Filter (MF), and outputs the FTN symbol to the OQAM demapping section 404. In FTN demapping, it is preferable to use the same projection coefficient $C_{k,l,m,n}$ as that used in the FTN mapping section 305 of the FTN transmitter. The FTN symbol in a position of a subcarrier $k$ and symbol $l$ subsequent to FTN demapping is represented by (Equation 12).

[Mathematics 12]

$$\overline{x}_{k,l} = \sum_{m,n} C_{k,l,m,n} \hat{h}^* h_{m,n} x'_{m,n} + \eta'_{k,l} \qquad \text{(Equation 12)}$$

Herein, $\hat{h}^*$ represents conjugate of the estimation value of the channel response. $h_{m,n}$ is the channel response in a position of a subcarrier $m$ and symbol $n$. In the case of estimating a channel response using a reference signal, generally, the channel response is averaged in one subframe and intervals of several subcarriers, and therefore, in a range ($=N_t \times N_f$) of FTN mapping, it is assumed that $h_{m,n} \cong \hat{h} \cdot N_t$ and $N_f$ respectively represent ranges of time and frequency domains of the OFDM/OQAM symbol where the FTN symbol provides ISI and ICI. Further, $\mathfrak{I}$ is a noise component in the FTN symbol position subjected to demapping.

As shown in (Equation 12), by collecting FTN symbols mapped to a plurality of OFDM/OQAM symbol positions, a noted FTN symbol is reproduced. Using (Equation 7), the FTN symbol in a position of a subcarrier $k_l$ and symbol $l_l$ of (Equation 12) is represented by (Equation 13).

[Mathematics 13]

$$\overline{x}_{k_1,l_1} = \sum_{m,n} C_{k_1,l_1,m,n} \hat{h}^* h_{m,n} \left( x_{k_1,l_1} C_{k_1,l_1,m,n} + \sum_{(k_p,l_q) \neq (k_1,l_1)} x_{k_p,l_q} C_{k_p,l_q,m,n} \right) + \eta'_{k_1,l_1}$$

(Equation 13)

In (Equation 13), the first term inside the parentheses of the right side indicates the noted FTN symbol in ($k_l$, $l_l$) position. Further, the second term inside the parentheses indicates ISI and ICI in the FTN symbol ($k_l$, $l_l$) position from other FTN symbols. As can be understood from (Equation 13), the FTN symbol in a predetermined position undergoes the effects of ISI and ICI from other FTN symbols during a process of the demapping processing.

The OQAM demapping section 404 acquires a modulation symbol by OFDM/OQAM demapping on the FTN symbol input from the FTN demapping section 403 to output to the LMMSE filter 405.

The LMMSE filter 405 outputs a signal with ISI and ICI suppressed, and the space decoding section 406 performs decoding of space coding. Based on the symbol input from the space decoding section 406, the LLR calculating section 407 calculates a posteriori Log-Likelihood Ratio (posteriori LLR) to output to the deinterleaver 408. For example, it is possible to calculate the posteriori LLR with a Max-Log-MAP decoder.

The deinterleaver 408 deinterleaves the symbol input from the LLR calculating section 407 to output to the channel decoding section 409.

The channel decoding section 409 calculates the posteriori LLR of information bit and parity bit from the symbol subjected to deinterleaving by the deinterleaver 408 to output.

In this Embodiment, in order to divide each modulation symbol, interference cancellation by turbo SIC is applied. Specifically, iteration processing is performed where a soft decision estimation value of a symbol providing interference is generated based on the posteriori LLR and is subtracted from the received signal. As a configuration of turbo SIC, the posteriori LLR of each bit may be calculated by in-phase-combining symbols corresponding to receive diversity branches, and then, calculating a square Euclidean distance between the combined signal and a received symbol replica of a combination of all transmission signals.

Since iteration decoding is performed by turbo SIC, a transmission signal is generated by performing the same processing as in the FTN transmission processing section 300, using the information symbol output from the channel decoding section 409, to generate a soft decision symbol estimation value of interference symbol. The interleaver 412, S/P conversion section 415, space coding section 416 and OQAM mapping section 417 are allowed to have the same configuration as in the above-mentioned processing (interleaver 302, S/P conversion section 304, space coding section 305 and OQAM mapping section 306) on the transmission side, and therefore, descriptions thereof are omitted.

Further, in FIG. 13, based on the posteriori LLR of each of interleaved information bits and parity bit output from the interleaver 412, the soft decision symbol estimation value generating section 414 generates estimation values of soft decision symbols in positions of all OFDM symbols (or OFDM/OQAM symbols) of all subcarriers corresponding to the modulation scheme.

Further, based on the FTN symbol output from the OQAM mapping section 417, the interference-symbol soft decision symbol estimation value generating section 421 generates a soft decision symbol estimation value of interference symbol. The soft decision symbol estimation value of interference symbol refers to soft decision estimation values of information symbols in symbol positions of all subcarriers providing the noted predetermined information symbol with interference. Specifically, the interference-symbol soft decision symbol estimation value generating section 421 calculates a signal obtained by subtracting a soft decision symbol estimation value of the noted symbol from all soft decision symbol estimation values generated in the soft decision symbol estimation value generating section 414.

In loops except last iteration of turbo SIC, the posteriori LLR of the coded bit is used in generation of the soft decision symbol estimation value of each transmission stream. In addition, usually, an external LLR is used in generation of the soft decision symbol estimation value, but in this Embodiment, it is preferable to use the posteriori LLR. When the interference level is high, as compared with the case of using the external LLR, it is possible to achieve an excellent error rate by using the posteriori LLR.

Based on the soft decision symbol estimation value of interference symbol, the FTN mapping section 422 performs mapping on the symbol estimation value in the subcarrier position imposing interference on the noted symbol according to (Equation 7). Concerning a configuration of FTN mapping, it is possible to make the configuration the same as in the FTN mapping section 305.

Then, the combining section 423 subtracts the soft decision symbol estimation value of interference symbol output from the FTN mapping section 422 from the received signal subjected to FFT processing in the FFT section 402. By this means, it is possible to reduce ISI and ICI affecting the noted symbol.

One cycle of the iteration step is completed by performing the processing for subtracting the soft decision symbol estimation value of interference symbol for all information symbols. In the iteration step of the next cycle, the processing from the FTN demapping section 403 is performed again on a signal output from the prior iteration step.

In the last iteration loop of turbo SIC, by performing a hard decision on the posteriori LLR of output of the Max-Log-MAP decoder, a transmission bit sequence (decoded bits) is reproduced. When iteration is performed on a given received signal the predetermined number of times (for example, $N_{itr}$ times), the FTN reception processing section 400 may judge as the last iteration loop to output decoded bits.

As described above, according to this Embodiment, by applying FTN to OFDMA using transmit diversity using OFDM/OQAM symbols, it is possible to improve throughput. In this Embodiment, after performing space coding on an OFDM symbol, FTN is applied to a signal of each of a plurality of antennas. By this means, it is possible to flexibly achieve switching between orthogonal multiple access (OFDMA) and non-orthogonal multiple access (FTN) in the case of using transmit diversity, and further, by applying transmit diversity to both orthogonal multiple access and non-orthogonal multiple access, it is possible to exhibit the remarkable effect of enabling a required average SNR to meet a target error rate to be decreased.

(Modification)

In addition, the above-mentioned Embodiment illustrates the configuration for applying one of STBC and SFBC as space coding to achieve transmit diversity, but the invention is not limited thereto. For example, a configuration may be made where the space coding section 305 and space decoding section 406 perform space coding and space decoding using both of STBC and SFBC.

Further, the above-mentioned Embodiment illustrates the configuration for applying open loop type transmit diversity without using feedback information from the reception side as transmit diversity, but the present invention is not limited thereto. For example, a configuration of applying close loop type transmit diversity using feedback information from the reception side may be adopted. In this case, instead of the space coding section 305 and space decoding section 405, a precoding weight multiplying section and combining decoding section are used. Further, the FTN receiver transmits information on the channel response to the FTN transmitter as feedback.

In order to suppress decrease in transmission quality, the precoding weight multiplying section multiplies a transmission signal of each antenna by a precoding weight to control the phase and/or amplitude, based on the information on the channel response transmitted from the FTN receiver as feedback. On the other hand, using signals received in a plurality of antennas, the combining decoding section estimates the precoding multiplied by each antenna of the FTN transmitter to acquire a sequence of a demodulation signal.

In addition, in the above-mentioned Embodiment, the number of antennas of the FTN transmitter is two, but the present invention is not limited thereto. For example, in the case where the number of transmission antennas is four, a configuration is adopted where the space coding section 305 generates transmission symbols corresponding to four antennas, and OQAM mapping, FTN mapping and the like is performed on each symbol.

(Configuration of a radio communication system)

A radio communication system according to one Embodiment of the present invention will be described below. In the radio communication system is used a radio communication method according to the above-mentioned Embodiment.

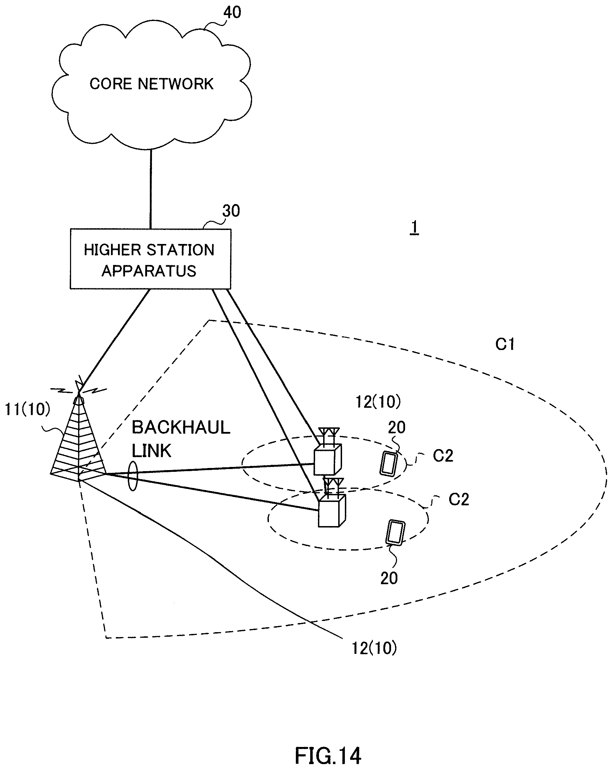

FIG. 14 is a schematic configuration diagram showing one example of the radio communication system according to one Embodiment of the present invention. As shown in FIG. 14, the radio communication system 1 is provided with a plurality of radio base stations 10 (11 and 12), and a plurality of user terminals 20 which is present inside a cell formed by each radio base station 10 and is configured to be able to communicate with each radio base station 10. Each of the radio base stations 10 is connected to a higher station apparatus 30, and is connected to a core network 40 via the higher station apparatus 30.

In FIG. 14, for example, the radio base station 11 is comprised of a macro base station having relatively wide coverage, and forms a macrocell C1. The radio base station 12 is comprised of a small base station having local coverage, and forms a small cell C2. In addition, the numbers of radio base stations 11 and 12 are not limited to the numbers as shown in FIG. 14. Further, a configuration may be made where one of the radio base station 11 and the radio base station 12 is not disposed.

In the macrocell C1 and small cell C2, the same frequency band may be used, or different frequency bands may be used. Further, the radio base stations 11 and 12 are mutually connected via inter-base station interface (for example, optical fiber, X2 interface).

In addition, the macro base station 11 may be called eNodeB (eNB), radio base station, transmission point and the like. The small base station 12 may be called RRH (Remote Radio Head), pico-base station, femto-base station, Home eNodeB, transmission point, eNodeB (eNB) and the like.

The user terminal 20 is a terminal supporting various types of communication schemes such as LTE and LTE-A, and may include a fixed communication terminal as well as the mobile communication terminal. The user terminal 20 is capable of performing communications with another user terminal 20 via the radio base station 10. Further, the user terminal 20 may perform direct communications (D2D: Device to Device) with another user terminal 20 by bypassing the radio base station 10. In other words, the user terminal 20 may have the function of directly transmitting and receiving inter-terminal signals (D2D signals) for D2D discovery, D2D synchronization, D2D communication and the like. In addition, the D2D signal is assumed to be based on SC-FDMA (Single Carrier-Frequency Division Multiple Access) as a basic signal format, but is not limited thereto.

For example, the higher station apparatus 30 includes an access gateway apparatus, Radio Network Controller (RNC), Mobility Management Entity (MME) and the like, but is not limited thereto.

As downlink channels, in the radio communication system 1 are used a downlink shared channel (PDSCH: Physical Downlink Shared Channel) shared by user terminals 20, downlink control channels (PDCCH: Physical Downlink Control Channel, EPDCCH: Enhanced Physical Downlink Control Channel), broadcast channel (PBCH: Physical Broadcast Channel) and the like. User data, higher layer control information, SIB (System Information Block) as a broadcast signal and the like are transmitted on the PDSCH. Downlink control information (DCI) such as scheduling information of PDSCH and PUSCH is transmitted on the PDCCH and EPDCCH. Further, synchronization signals, MIB (Master Information Block) and the like are transmitted on the PBCH.

As uplink channels, in the radio communication system 1 are used an uplink shared channel (PUSCH: Physical Uplink Shared Channel) shared by user terminals 20, uplink control channel (PUCCH: Physical Uplink Control Channel) and the like. User data and higher layer control information is transmitted on the PUSCH. Further, on the PUCCH is transmitted radio quality information (CQI: Channel Quality Indicator) of downlink and Uplink Control Information (UCI) such as ACK/NACK. Furthermore, in the radio communication system 1, using uplink resources, D2D discovery signals to mutually detect terminals may be transmitted between user terminals 20.

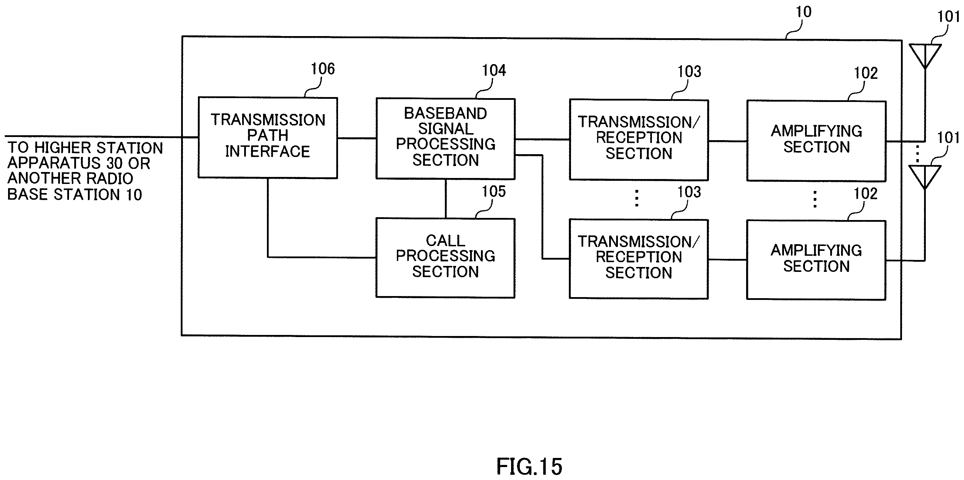

FIG. 15 is an entire configuration diagram of the radio base station 10 according to one Embodiment of the present invention. The radio base station 10 is provided with a plurality of transmission/reception antennas 101 for MIMO transmission, amplifying sections 102, transmission/reception sections (transmission section and reception section) 103, baseband signal processing section 104, call processing section 105, and transmission path interface 106.

User data to transmit to the user terminal 20 from the radio base station 10 on downlink is input to the baseband signal processing section 104 from the higher station apparatus 30 via the transmission path interface 106.

The baseband signal processing section 104 performs, on the input user data, processing of PDCP layer, segmentation and concatenation of the user data, transmission processing of RLC (Radio Link Control) layer such as RLC retransmission control, MAC (Medium Access Control) retransmission control (for example, transmission processing of HARQ (Hybrid ARQ)), scheduling, transmission format selection, channel coding, Inverse Fast Fourier Transform (IFFT) processing, and precoding processing to transfer to each of the transmission/reception sections 103. Further, also concerning a downlink control signal, the section 104 performs transmission processing such as channel coding and Inverse Fast Fourier Transform on the signal to transfer to each of the transmission/reception sections 103.

Each of the transmission/reception sections 103 converts the downlink signal, which is subjected to precoding for each antenna and is output from the baseband signal processing 104, into a signal with a radio frequency band. Further, the transmission/reception sections 103 constitute a transmission section according to this Embodiment. The amplifying sections 102 amplify the radio-frequency signal subjected to frequency conversion, and transmit from the transmission/reception antennas 101.

On the other hand, for an uplink signal, a radio-frequency signal received in each of the transmission/reception antennas 101 is amplified in respective one of the amplifying sections 102, is subjected to frequency conversion in respective one of the transmission/reception sections 103 and is thereby converted into a baseband signal, and the signal is input to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

The transmission path interface 106 transmits and receives (backhaul signaling) signals to/from an adjacent radio base station via the inter-base station interface (for example, optical fiber, X2 interface). Further, the transmission path interface 106 transmits and receives signals to/from the higher station apparatus 30 via a predetermined interface.

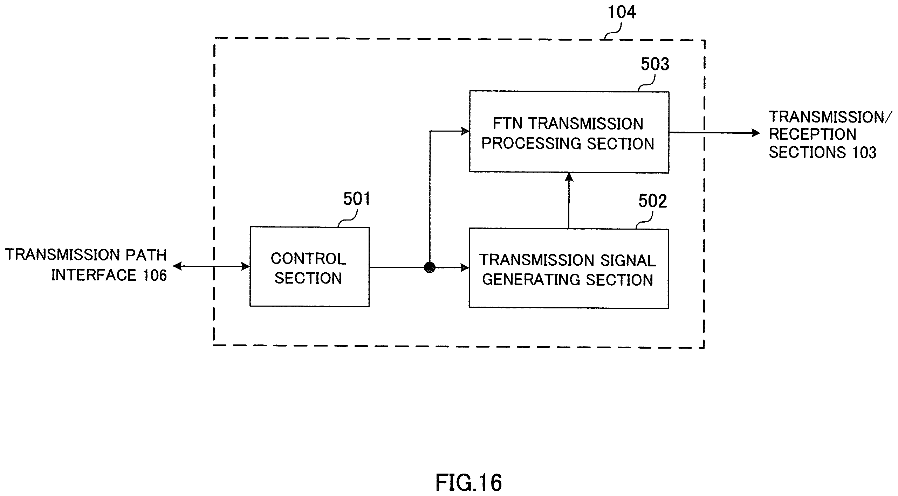

FIG. 16 is a principal function configuration diagram of the baseband signal processing section 104 that the radio base station 10 has according to one Embodiment of the present invention. As shown in FIG. 16, the baseband signal processing section 104 that the radio base station 10 has includes at least a control section 501, transmission signal generating section 502, and FTN transmission processing section 503 (transmission processing section) to be comprised thereof.

The control section 501 controls scheduling of the downlink user data transmitted on the PDSCH, and the downlink control information, downlink reference signal and the like transmitted on both or one of the PDCCH and Enhanced PDCCH (EPDCCH). Further, the control section 501 also performs control of scheduling of RA preamble transmitted on the PRACH, uplink data transmitted on the PUSCH, and uplink control information and uplink reference signal transmitted on the PUCCH or PUSCH each from the user terminal 20. Information on scheduling (assignment control) of the downlink signal, uplink signal and the like is notified to the user terminal 20 using the downlink control signal (DCI).

The control section 501 controls the allocation of radio resources to the downlink signal and uplink signal, based on instruction information from the higher station apparatus 30 acquired via the transmission path interface 106 and feedback information (for example, CSI) transmitted from each user terminal 20 acquired via the transmission/reception section 103. In other words, the control section 501 has a function as a scheduler. In addition, when another radio base station 10 or the higher station apparatus 30 functions as a centralized scheduler for a plurality of radio base stations 10, the control section 501 may omit the function as a scheduler.

The transmission signal generating section 502 generates a downlink control signal, downlink data signal, downlink reference signal and the like such that assignment is determined by the control section 501, and outputs the signal to the FTN transmission processing section 503 as appropriate. For example, based on instructions from the control section 501, the transmission control signal generating section 502 generates DL assignment for notifying of downlink signal assignment information and UL grant for notifying of uplink signal assignment information to output to the FTN transmission processing section 503.

Based on assignment control by the control section 501, the FTN transmission processing section 503 applies FTN to the signal output from the transmission signal generating section 502, and thereby maps an OFDMA signal (FTN signal) using transmit diversity into which information symbols are multiplexed at a rate higher than the Nyquist rate to output.

In addition, it is essential only that the FTN transmission processing section 503 is of the configuration capable of generating a signal obtained by applying FTN to OFDMA using transmission diversity using OFDM/OQAM symbols to output, and the FTN transmission processing section 300 described in the above-mentioned Embodiment may be used. Further, the FTN transmission processing section 503 may be of a configuration capable of outputting a normal OFDMA signal (OFDM/OQAM signal) using transmit diversity, by not applying FTN.

A signal output from the FTN transmission processing section 503 is transmitted to the user terminal 20 by the transmission/reception section 103.

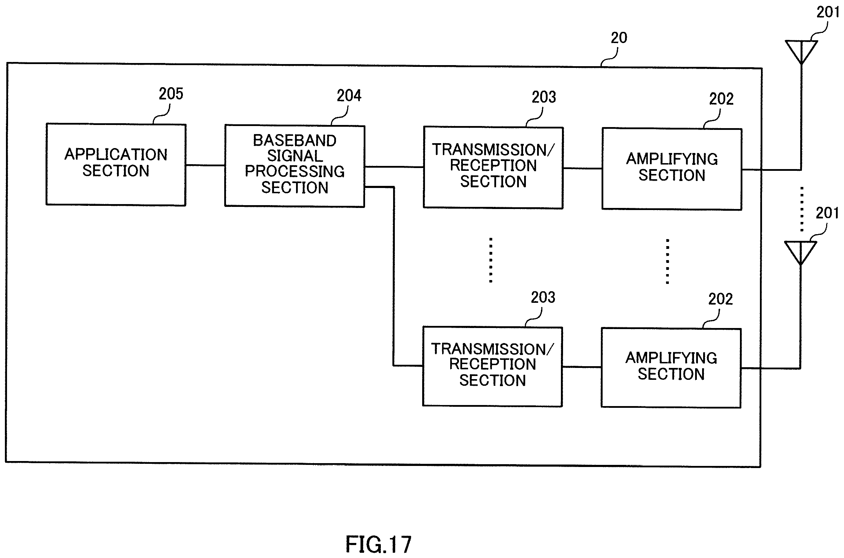

FIG. 17 is an entire configuration diagram of the user terminal 20 according to one Embodiment of the present invention. As shown in FIG. 17, the user terminal 20 is provided with a plurality of transmission/reception antennas 201 for MIMO transmission, amplifying sections 202, transmission/reception sections (reception section) 203, baseband signal processing section 204, and application section 205.

For downlink data, radio-frequency signals received in a plurality of transmission/reception antennas 201 are respectively amplified in the amplifying sections 202, and are subjected to frequency conversion in the transmission/reception sections 203 to be baseband signals. The baseband signal is subjected to FFT processing, error correcting decoding, reception processing of retransmission control and the like in the baseband signal processing section 204. Among the downlink data, downlink user data is transferred to the application section 205. The application section 205 performs processing concerning layers higher than physical layer and MAC layer, and the like. Further, among the downlink data, broadcast information is also transferred to the application section 205.

On the other hand, for uplink user data, the data is input to the baseband signal processing section 204 from the application section 205. The baseband signal processing section 204 performs transmission processing (for example, transmission processing of HARQ) of retransmission control, channel coding, precoding, Discrete Fourier Transform (DFT) processing, IFFT processing and the like to transfer to each of the transmission/reception sections 203. Each of the transmission/reception sections 203 converts the baseband signal output from the baseband signal processing section 204 into a signal with a radio frequency band. Subsequently, each of the amplifying sections 202 amplifies the radio-frequency signal subjected to frequency conversion to transmit from respective one of the transmission/reception antennas 201.

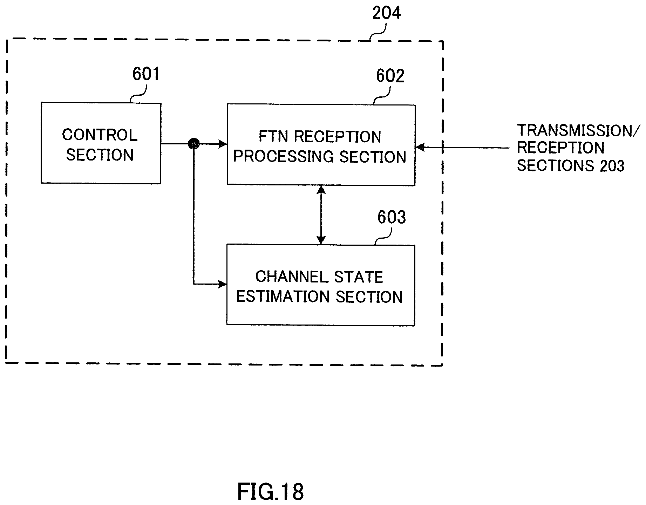

FIG. 18 is a principal function configuration diagram of the baseband signal processing section 204 that the user terminal 20 has according to one Embodiment of the present invention. As shown in FIG. 18, the baseband signal processing section 204 that the user terminal 20 has includes at least a control section 601, FTN reception processing section (reception processing section) 602 and channel state estimation section 603 to be comprised thereof.

From the downlink control signal (DCI) transmitted from the radio base station 10 or higher layer signaling (for example, RRC signaling, broadcast signal), the control section 601 acquires information on assignment control of radio resources. Further, based on the information, the control section 601 performs control of processing timing of the FTN reception processing section 602 and channel state estimation section (channel response estimation section) 603.

According to control by the control section 601, the FTN reception processing section 602 performs reception processing (demapping, interference cancellation and the like) on a received signal as the signal (OFDMA signal with FTN applied thereto) obtained by applying FTN to OFDMA using transmission diversity using OFDM/OQAM symbols.

In addition, it is essential only that the FTN reception processing section 602 is of the configuration capable of acquiring an information symbol by applying the reception processing to an OFDMA signal with FTN applied thereto, and the FTN reception processing section 400 described in the above-mentioned Embodiment may be used. Further, the FTN reception processing section 602 may be of a configuration capable of decoding a normal OFDMA signal using transmit diversity, by not applying FTN.

Further, for a reference signal, the FTN reception processing section 602 outputs a signal subjected to multicarrier demodulation (FFT) to the channel state estimation section 603.

The channel state estimation section 603 estimates a channel state (channel response), based on the reference signal input from the FTN reception processing section 602. In addition, in the case of acquiring information on a reference signal multiplexing position for each transmission antenna according to a plurality of transmission antennas, the section is capable of estimating a channel state of each antenna based on the information.

The channel state estimation section 603 outputs the channel estimation result to the FTN reception processing section 602. For example, it is possible to use the channel estimation result in the demapping processing of the FTN symbol using (Equation 12) in the FTN demapping section 403 according to the above-mentioned Embodiment.

In addition, the control section 501 of the radio base station 10 may be configured to control to perform Time Division Multiplexing on a transmission signal (OFDMA signal) into a first radio resource region (orthogonal multiplexing portion) where OFDM/OQAM symbols are multiplexed at a symbol rate of the Nyquist rate or less in a given time domain and/or frequency domain and into a second radio resource region (non-orthogonal multiplexing portion) where the FTN symbol is allocated at a symbol rate higher than the Nyquist rate in the given time domain and/or frequency domain.

Specifically, the control section 501 of the radio base station 10 may be configured to control so as to generate information on resources allocated by Time Division Multiplexing to notify with the downlink control channel (PDCCH, EPDCCD) or higher layer signaling (for example, RRC signaling, broadcast signal). As the information on resources allocated by Time Division Multiplexing, for example, the section may generate a symbol position of the orthogonal multiplexing portion, a subcarrier position to multiplex the reference signal in the orthogonal multiplexing portion, a subcarrier position of the orthogonal multiplexing portion for each of a plurality of antennas (or antenna ports) and the like.

In this case, based on the information on resources allocated by Time Division Multiplexing, the control section 501 of the radio base station 10 may control the transmission signal generating section 502 and the FTN transmission processing section 503 so as to perform Time Division Multiplexing (TDM) on a transmission signal into the orthogonal multiplexing portion and the non-orthogonal multiplexing portion. It is preferable that the control section 501 controls so as to map a signal to transmit with high quality to the orthogonal multiplexing portion. For example, it is preferable that the control section 501 controls so as to map a reference signal symbol into the orthogonal multiplexing portion. In addition, the control section 501 may control to map the data signal and control signal output from the transmission signal generating section 502 into the orthogonal multiplexing portion as the information symbol (data symbol, control information symbol and the like).

Further, based on the above-mentioned information on resources allocated by Time Division Multiplexing notified from the radio base station 10, the control section 601 of the user terminal 20 may determine symbol positions, subcarrier positions and the like of the orthogonal multiplexing portion and the non-orthogonal multiplexing portion, and control whether or not the FTN reception processing section 602 performs the reception processing (demapping, interference cancellation and the like) on the received signal as the FTN signal. For example, the section may be configured to determine that the signal corresponding to the orthogonal multiplexing portion is not the OFDMA signal with FTN applied thereto and is the normal OFDMA signal using transmit diversity to perform the reception processing.

Furthermore, based on the channel estimation result with the reference signal, the channel state estimation section 603 of the user terminal 20 may execute channel estimation other than radio resources with the reference signal allocated. For example, after performing channel estimation of each subcarrier position in the frequency domain for the orthogonal multiplexing portion, the section performs channel estimation of each subcarrier and each symbol position in the time domain for the non-orthogonal multiplexing portion.

Specifically, for example, the channel state estimation section 603 of the user terminal 20 performs interpolation (for example, weighted In-phase addition) on the channel response in each subcarrier position of the frequency domain, and is capable of estimating the channel response of each subcarrier position. Then, the section performs interpolation of the channel response of each subcarrier position of the orthogonal multiplexing portion of a given subframe and the orthogonal multiplexing portion of the subframe next to the given subframe, and is capable of estimating the channel state according to each symbol position in the time domain.

As described above, the present invention is specifically described using the above-mentioned Embodiment, but it is obvious to a person skilled in the art that the invention is not limited to the Embodiment described in the Description. The invention is capable of being carried into practice as modified and changed aspects without departing from the subject matter and scope of the invention defined by the descriptions of the scope of the claims. Accordingly, the descriptions of the Description are intended for illustrative explanation, and do not have any restrictive meaning to the invention.

The present application is based on Japanese Patent Application No. 2014-039578 filed on February 28, 2014, entire content of which is expressly incorporated by reference herein.

**Claims**

1. A radio base station comprising:

   a transmission processing section that converts a symbol allocated at a higher symbol rate than a Nyquist rate in a given time domain and/or frequency domain into a symbol allocated at a symbol rate of the Nyquist rate or less in the given time domain and/or frequency domain to generate an OFDMA (Orthogonal Frequency Division Multiple Access) signal for each of a plurality of antennas; and
   a transmission section that transmits the OFDMA signal of each of the plurality of antennas to a user terminal,

   wherein the transmission processing section applies transmit diversity with the plurality of antennas to the symbol allocated at the higher symbol rate.

2. The radio base station according to claim 1, wherein the transmission processing section converts a symbol such that a product of a symbol interval and a subcarrier interval is less than 1/2 into an OFDM/OQAM (Orthogonal Frequency Division Multiple Access/Offset Quadrature Amplitude Modulation) symbol such that the product of a symbol interval and a subcarrier interval is 1/2.

3. The radio base station according to claim 1 or claim 2, wherein the transmission processing section applies Space-Time Block Code (STBC) and/or Space-Frequency Block Code (SFBC).

4. The radio base station according to claim 1 or claim 2, further comprising:

   a reception section that receives information on a channel state from the user terminal,

   wherein the transmission processing section multiplies the OFDMA signal of each of the plurality of antennas by a precoding weight to control a phase and/or amplitude, based on the information on the channel state.

5. A user terminal comprising:

   a reception section that receives an OFDMA (Orthogonal Frequency Division Multiples Access) signal with transmit diversity applied with a plurality of antennas in a radio base station; and
   a reception processing section that converts a symbol allocated at a symbol rate of a Nyquist rate or less in a given time domain and/or frequency domain included in the OFDMA signal into a symbol allocated at a higher symbol rate than the Nyquist rate in the given time domain and/or frequency domain to decode,

wherein based on the transmit diversity, the reception processing section decodes the symbol allocated at the higher symbol rate.

6. The user terminal according to claim 5, wherein the reception processing section converts an OFDM/OQAM (Orthogonal Frequency Division Multiple Access/Offset Quadrature Amplitude Modulation) symbol such that a product of a symbol interval and a subcarrier interval is 1/2 into a symbol such that the product of a symbol interval and a subcarrier interval is less than 1/2.

7. The user terminal according to claim 5 or claim 6, wherein based on Space-Time Block Code (STBC) and/or Space-Frequency Block Code (SFBC), the reception processing section decodes the symbol allocated at the higher symbol rate.

8. The user terminal according to claim 5 or claim 6, further comprising:

   a channel response estimation section that estimates a channel response based on a reference signal symbol included in the OFDMA signal,

   wherein based on the channel response, the reception processing section estimates a precoding weight multiplied by each of transmission signals of the plurality of antennas of the radio base station, and based on the precoding weight, decodes the symbol allocated at the higher symbol rate.

9. A radio communication method in a radio base station for communicating with a user terminal, comprising:

   converting a symbol allocated at a higher symbol rate than a Nyquist rate in a given time domain and/or frequency domain into a symbol allocated at a symbol rate of the Nyquist rate or less in the given time domain and/or frequency domain to generate an OFDMA (Orthogonal Frequency Division Multiple Access) signal for each of a plurality of antennas; and
   transmitting the OFDMA signal of each of the plurality of antennas to the user terminal,

   wherein transmit diversity with the plurality of antennas is applied to the symbol allocated at the higher symbol rate.

10. A radio communication system where a radio base station and a user terminal communicate with each other, wherein the radio base station has a transmission processing section that converts a symbol allocated at a higher symbol rate than a Nyquist rate in a given time domain and/or frequency domain into a symbol allocated at a symbol rate of the Nyquist rate or less in the given time domain and/or frequency domain to generate an OFDMA (Orthogonal Frequency Division Multiple Access) signal for each of a plurality of antennas, and
   a transmission section that transmits the OFDMA signal of each of the plurality of antennas to the user terminal, and the transmission processing section applies transmit diversity with the plurality of antennas to the symbol allocated at the higher symbol rate.

ANTENNA #0

| $x_{0,l}$ | $x_{1,l}$ |

TRANSMISSION
SECTION

ANTENNA #1

| $-x_{1,l}^{*}$ | $x_{0,l}^{*}$ |

FIG.1

704

705

708

709

SEQUENCE OF
MODULATION
SIGNAL

S/P
CONVERSION
SECTION

SPACE CODING
SECTION

MULTICARRIER
MODULATION
(IFFT) SECTION

CP ADDING
SECTION

TRANSMISSION
SIGNAL #1

TRANSMISSION
SIGNAL #0

⟶ SERIAL SIGNAL

⟹ PARALLEL SIGNAL

FIG.2

EP 3 113 379 A1

FIG.3

FIG.4A

W1    W2

TIME

NYQUIST INTERVAL

FIG.4B

INTER-SYMBOL
INTERFERENCE AND
INTER-SUBCARRIER
INTERFERENCE OCCUR

W1  W3    W2  W4

TIME

NYQUIST INTERVAL

FIG.5

|  | METHOD USING Inverse Fast Fractional FT (IFFrFT) | METHOD USING A PLURALITY OF IFFT | METHOD OF MAPPING-CONVERTING FTN SYMBOL INTO OFDM/OQAM SYMBOL |
|---|---|---|---|
| GENERATION METHOD | DIRECT GENERATION OF FTN SYMBOL UNDERGOING INTER-SYMBOL INTERFERENCE | GENERATION BY ADDING TIME DOMAIN SIGNAL SUBJECTED TO IFFT TO OFDM/OQAM (OFDM) SYMBOL | APPLY IFFT BY PROJECTING FTN SYMBOL ONTO OFDM/ OQAM SYMBOL |
| COMPUTATION AMOUNT | MEDIUM | LARGE | MEDIUM |
| FLEXIBILITY OF ACTUALIZATION FOR MODIFICATION OF FTN MULTIPLEXING EFFICIENCY | NEED FOR MODIFYING KERNEL FUNCTION OF IFFrFT | NEED FOR MODIFYING THE NUMBER OF IFFT | NEED FOR MODIFYING PROJECTION COEFFICIENT TABLE |
| FLEXIBILITY OF SWITCHING TO ORTHOGONAL OFDM | NO FLEXIBILITY | NO FLEXIBILITY | ALLOWED TO SWITCH FLEXIBLY |

FIG.6

EP 3 113 379 A1

OFDM SYMBOL INTERVAL → $T$

OFDM/OQAM SYMBOL INTERVAL → $T/2$

● IN-PHASE COMPONENT OF ORIGINAL OFDM SYMBOL

○ QUADRATURE COMPONENT OF ORIGINAL OFDM SYMBOL

FIG.7

EP 3 113 379 A1

FIG.8

EP 3 113 379 A1

FIG.9

FTN
SYMBOL

OFDM/OQAM
SYMBOL

$C_{k+1,l+1,m,n}$

$x_{k+1,l+1}$

$C_{k,l+1,m,n}$

$x_{k,l+1}$

$\Sigma$

$x'_{m,n}$

$C_{k-1,l+1,m,n}$

$x_{k-1,l+1}$

$C_{k+1,l,m,n}$

$C_{k,l,m,n}$

$C_{k+1,l-1,m,n}$

$C_{k-1,l,m,n}$

$C_{k,l-1,m,n}$

$C_{k-1,l-1,m,n}$

$D$

$D$

$D$

$D$

$D$

$D$

$\boxed{D}$ : DELAY ELEMENT

FIG.10

$\tau_0$: OFDM/OQAM SYMBOL LENGTH

FIG.11

FIG.12

FIG.13

40

CORE NETWORK

30

HIGHER STATION
APPARATUS

1

C1

11(10)

BACKHAUL
LINK

12(10)

20

C2

C2

20

12(10)

FIG.14

FIG.15

TRANSMISSION/
RECEPTION
SECTIONS 103

104

503
FTN TRANSMISSION
PROCESSING SECTION

502
TRANSMISSION SIGNAL
GENERATING SECTION

501
CONTROL
SECTION

TRANSMISSION PATH
INTERFACE 106

FIG.16

FIG.17

EP 3 113 379 A1

FIG.18

EP 3 113 379 A1

**INTERNATIONAL SEARCH REPORT**

| International application No. |
|---|
| PCT/JP2015/055906 |

| A. CLASSIFICATION OF SUBJECT MATTER |
|---|
| *H04B7/02*(2006.01)i |

According to International Patent Classification (IPC) or to both national classification and IPC

| B. FIELDS SEARCHED |
|---|

Minimum documentation searched (classification system followed by classification symbols)
H04B7/02

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)
    IEEE Xplore

| C. DOCUMENTS CONSIDERED TO BE RELEVANT |
|---|

| Category* | Citation of document, with indication, where appropriate, of the relevant passages | Relevant to claim No. |
|---|---|---|
| Y | D. Dasalukunte, F. Rusek, J.B. Anderson, and V. Owall, "Transmitter architecture for faster-than-Nyquist signaling systems", Circuits and Systems, 2009. ISCAS 2009. IEEE International Symposium on, IEEE, 2009.05.27, pp.1028-1031 | 1-4,9 |
| Y | J. Du, P. Xiao, J. Wu, and Q. Chen, "Design of isotropic orthogonal transform algorithm-based multicarrier systems with blind channel estimation", Communications, IET, Issue.16 Vol.6, IET, 2012.11.06, pp.2695-2704 | 1-10 |
| Y | D. Dasalukunte, Multicarrier Faster-than-NyquistSignaling TransceiversFrom Theory to Practice, Lund University Ph.D Thesis, Lund University, 2012.01, pp.69-78 | 5-8,10 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 March 2015 (23.03.15) | 31 March 2015 (31.03.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**EP 3 113 379 A1**

REFERENCES CITED IN THE DESCRIPTION

**Patent documents cited in the description**

- JP 2014039578 A